(19) Europäisches Patentamt
European Patent Office
Office européen des brevets

(11) **EP 1 385 272 B1**

(12) **FASCICULE DE BREVET EUROPEEN**

(45) Date de publication et mention
de la délivrance du brevet:
**30.08.2017 Bulletin 2017/35**

(51) Int Cl.:
**H04B 1/69** (2011.01)

(21) Numéro de dépôt: **03291832.8**

(22) Date de dépôt: **24.07.2003**

(54) **Procédé destiné à communiquer de l'information entre un émetteur et un récepteur à l'aide de signaux à bande ultra-large**

Verfahren zur Übertragung von Information zwischen einem Sender und einem Empfänger mittels Ultra-Breitbandsignalen

Method for communicating information between a transmitter and a receiver using ultra-wide band signals

(84) Etats contractants désignés:
**CH DE FR GB LI**

(30) Priorité: **26.07.2002 FR 0209513**

(43) Date de publication de la demande:
**28.01.2004 Bulletin 2004/05**

(73) Titulaire: **CSEM Centre Suisse d'Electronique et de**
**Microtechnique SA - Recherche et Développement**
**2007 Neuchâtel (CH)**

(72) Inventeurs:
• **Gerrits, John**
  **2016 Cortaillod (CH)**
• **Pollini, Alexandre**
  **1400 Yverdon (CH)**
• **Farserotu, John**
  **2012 Auvernier (CH)**

(74) Mandataire: **Lavoix**
  **2, place d'Estienne d'Orves**
  **75441 Paris Cedex 09 (FR)**

(56) Documents cités:
**WO-A-01/43386          WO-A-01/93443**
**US-A1- 2001 053 175**

**Description**

La présente invention est relative à un procédé pour établir des communications à l'aide de signaux à bande ultra-large (appelés signaux UWB; acronyme pour Ultra Wide Band).

Des signaux en ondelettes sont utilisés dans la technique de la communication pour transmettre de l'information numérique en utilisant une modulation, par exemple du type PPM (Pulse Position Modulation) ou OOK (ON-OFF Keying) des signaux en ondelettes.

Comme le spectre d'énergie de ces signaux s'étale sur une très large bande de fréquence, le niveau d'énergie global des communications peut, toute performance égale par ailleurs, être relativement faible de sorte qu'en utilisant de tels signaux en ondelettes, il est plus facile de se conformer à la réglementation concernant les télécommunications. Par ailleurs, une communication par signaux en ondelettes est peu sensible aux perturbations et aux réflexions de sorte que l'on peut l'utiliser avec avantage dans des environnements confinés dans lesquels d'autres communications à bande de fréquences étroite et à forte puissance sont déjà présentes. En général, un signal UWB présente une largeur de bande $B_{RF}$ telle à une fréquence centrale $f_c$ que

$$B_{RF} \geq \frac{f_c}{4}$$

On connaît plusieurs procédés pour engendrer des signaux UWB en ondelettes. Ils emploient soit de brèves impulsions gaussiennes, soit des salves ou des balayages d'ondes sinusoïdales obtenues par des techniques radio ou des commutations rapides (fast on-off keying).

Cependant, les circuits nécessaires pour engendrer les ondelettes sont relativement compliqués.

Par ailleurs, par un article intitulé « Multistage frequency-Hopping Assisted Ultre-Wideband Multiple-Acces Communications » (Communications UWB à accès multiple et à plusieurs étages, assistées par un processus de sauts de fréquence), de Yang et al., paru dans la revue IEEE, 2002, pages 748 à 752, on connaît un procédé conforme au préambule de la revendication 1.

Dans ce cas, la sous-porteuse est modulée par déplacement de fréquence, puis soumise à un processus de sauts de fréquence à partir d'une haute fréquence centrale. Les communications étant destinées à l'échange d'information entre une pluralité d'utilisateurs, les sauts de fréquence sont individualisés pour ces utilisateurs.

Ce procédé présente l'inconvénient de nécessiter une synchronisation entre émetteur et récepteur, ce dernier devant en outre posséder un oscillateur local à haute fréquence capable par mélange de fréquences de discriminer dans le signal entrant les divers sauts de fréquence et par suite la sous-porteuse portant l'information utile propre à chaque utilisateur.

Il en résulte une complication de la construction au niveau tant de l'émetteur que du récepteur.

L'invention a pour but de fournir un procédé pour établir des communications à bande ultra-large pour transmettre de l'information numérique ne nécessitant que des circuits simples du commerce.

L'invention a donc pour objet un procédé présentant les particularités de la partie caractérisante de la revendication 1.

Grâce à ces caractéristiques, l'information reçue est extraite du signal transmis par une double démodulation de sorte que l'émetteur et le récepteur peuvent être construits à l'aide de composants disponibles dans le commerce ce qui en réduit le coût à un minimum. On notera également qu'à la réception, on n'a pas besoin d'oscillateur local.

D'autres particularités intéressantes de l'invention sont définies dans les sous-revendications.

D'autres caractéristiques et avantages de la présente invention apparaîtront au cours de la description qui va suivre, donnée uniquement à titre d'exemple et faite en se référant aux dessins annexés sur lesquels:

la figure 1 est un schéma synoptique d'un émetteur permettant de mettre en oeuvre le procédé selon l'invention;
la figure 2 est un schéma synoptique d'un récepteur destiné à coopérer avec l'émetteur représenté sur la figure 1; et
la figure 3 est une image spectrale d'un signal pouvant transiter entre l'émetteur et le récepteur représentés respectivement sur les figures 1 et 2.

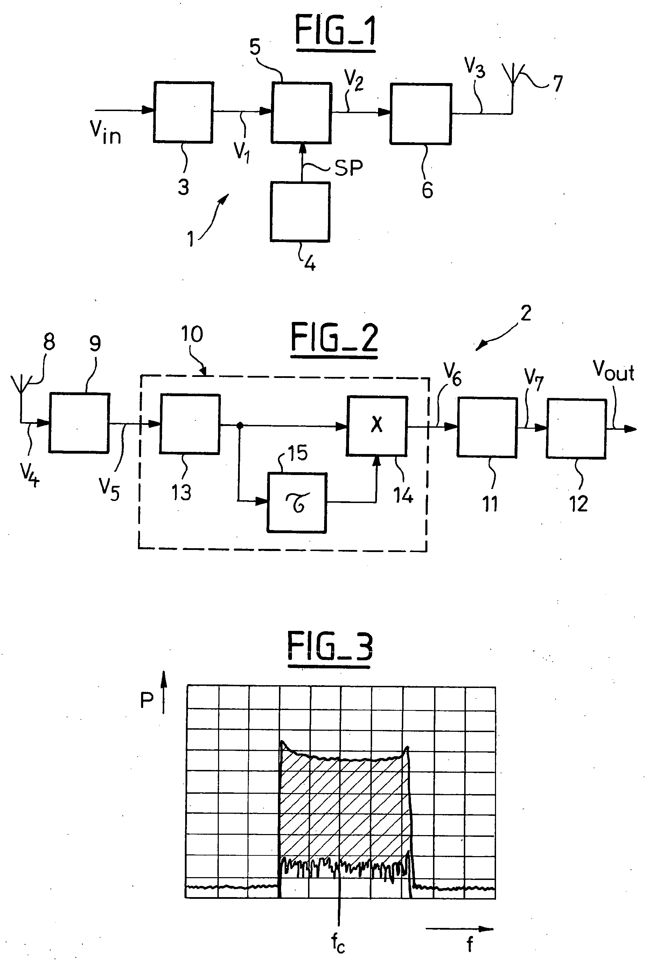

L'émetteur 1 représenté sur la figure 1 reçoit un signal $V_{in}$ dont le contenu doit être transmis à un récepteur 2 tel que celui représenté sur la figure 2. Le signal $V_{in}$ peut être de nature analogique ou numérique. Il est appliqué à un circuit 3 d'encodage ou de cryptage qui en fait un signal numérique $V_1$.

L'émetteur 1 comprend également un générateur de sous-porteuse 4 qui engendre un signal de sous-porteuse SP dont la fréquence est supérieure à la largeur de bande du signal $V_1$.

Le signal V1 et le signal de sous-porteuse SP sont appliqués à un modulateur de sous-porteuse 5 qui peut être conçu comme modulateur de fréquence ou d'amplitude. Si on choisit une modulation de fréquence, le générateur de sous-porteuse 4 peut être réalisé sous la forme d'un oscillateur à commande par une tension analogique (VCO) ou numérique (NCO). Dans ce dernier cas, on peut utiliser un microprocesseur associé à un logiciel approprié. On notera en outre que la sous-porteuse SP peut avoir diverses formes, une forme sinusoïdale, en dent de scie ou triangulaire étant préférée.

L'émetteur 1 comprend également un oscillateur à haute fréquence 6 auquel est appliqué le signal modulé $V_2$ provenant du modulateur 5. Le signal engendré par cet oscillateur à haute fréquence sert de porteuse à la communication entre l'émetteur 1 et le récepteur 2. Le signal $V_2$ module en fréquence cette porteuse de telle façon que la fréquence de sortie instantanée de l'émetteur 1 soit proportionnelle au signal $V_2$ qui est appliqué à l'oscillateur 6. En outre, la modulation de fréquence doit être réalisée avec un indice de modulation au moins égal à 10. L'oscillateur 6 peut également être du type à commande par une tension (VCO). Le signal de sortie $V_3$ de l'oscillateur 6 présente un signal UWB avec un contenu qui reflète celui du signal $V_{in}$ appliqué à l'entrée de l'émetteur 1. Ce signal de sortie $V_3$ est envoyé sur une antenne d'émission 7.

La fréquence de la sous-porteuse SP peut être choisie spécifiquement pour un couple émetteur/récepteur donné ou pour un groupe de tels couples émetteur/récepteur de façon que la communication devienne confidentielle pour celui-ci ou ceux-ci.

La communication est reçue sur une antenne 8 du récepteur 2. Celle-ci est connectée à un préamplificateur 9 auquel elle applique le signal reçu $V_4$ pour en augmenter le niveau avant démodulation. Le préamplificateur 9 peut comprendre des moyens de filtrage pour rejeter toute composante de signal due par exemple à des interférences reçues sur l'antenne 8 hors de la bande de fréquences concernée. Un démodulateur de modulation de fréquence à large bande 10 est connectée à la sortie du préamplificateur 9 dont il reçoit le signal $V_5$. Il en extrait le signal en bande de base ou sous-porteuse $V_6$. La sortie du démodulateur 10 est raccordée à un démodulateur de sous-porteuse 11 qui extrait de la sous-porteuse démodulée le signal encodé ou crypté $V_7$. Le contenu de ce dernier correspond au signal $V_1$ traité dans l'émetteur 1. Ce signal $V_7$ est ensuite décodé ou décrypté dans un décodeur 12 fournissant le signal de sortie $V_{out}$ correspondant au signal d'origine $V_{in}$ appliqué à l'entrée de l'émetteur 1.

De préférence, le démodulateur 10 est réalisé sous la forme d'un démodulateur à ligne à retard. Un amplificateur limiteur 13 connecté à la sortie du préamplificateur 9 est prévu pour supprimer toute composante en modulation d'amplitude dans le signal $V_5$. La sortie de l'amplificateur limiteur 13 est appliquée à la fois à un multiplicateur 14 et à une ligne à retard 15 introduisant un retard $\tau$. Ce retard est choisi de préférence tel que:

$$\tau = \frac{N}{4f_c} \qquad \text{avec N= 1, 3, 5.....}$$

$f_c$ étant la fréquence centrale de la porteuse du signal UWB et $B_{RF} = \frac{2f_c}{N}$ étant la sortie utile du démodulateur 10.

Par exemple, si on choisit N= 3, la largeur de bande sera égale à $0{,}67f_c$.

La ligne à retard 15 peut être formée par une ligne à ondes acoustiques de surface ou dans la masse que l'on pourra intégrer dans un même circuit que les circuits du récepteur 2. Un simple câble coaxial ou un « microstripline » peuvent également permettre de réaliser une ligne à retard.

La figure 3 montre à titre d'exemple le spectre de fréquences obtenu avec le procédé de l'invention avec une fréquence centrale de 69 MHz et une puissance à haute fréquence de 1 mW. On constate que ce spectre présente un étalement de bande spectrale en modulation de fréquence comportant une multitude de composantes spectrales de faible énergie. La largeur de bande du signal UWB est ici égale à 20 MHz. Dans un exemple de mise en oeuvre du procédé de l'invention, les composants suivant peuvent être utilisés tous disponibles dans le commerce:

| | |
|---|---|
| Modulateur 5 | CD 4046 |
| Oscillateur 6 | Minicircuits Pos 60 |
| Démodulateur de sous-porteuse 10 | PLL 4046 |
| Multiplicateur 14 | MC 1496 |

**Revendications**

**1.** Procédé destiné à communiquer de l'information utile se présentant sous la forme d'une tension analogique ou numérique ($V_{in}$) entre au moins un émetteur (1) et au moins un récepteur (2) au moyen de signaux UWB, ledit émetteur (1) comprenant un modulateur destiné à moduler une sous porteuse à l'aide de ladite information utile afin de fournir un premier signal modulé, un oscillateur à haute fréquence (6) et une antenne d'émission (7), et le récepteur (2) comprenant une antenne de réception (8) et des moyens d'amplification et de démodulation (9, 10) pour discriminer ladite information utile ($V_{in}$) dans le signal reçu sur ladite antenne de réception (8), **caractérisé en ce que**, à l'émission, la modulation de ladite sous-porteuse est une modulation en fréquence ou en amplitude, et **en ce qu'**il consiste en outre à moduler en fréquence un signal de porteuse à haute fréquence à bande de fréquence étroite engendré par l'oscillateur à haute fréquence à l'aide du premier signal modulé avec un indice de modulation au moins égal à 10 de manière à fournir un signal UWB, ce dernier présentant une largeur de bande $B_{RF}$ à une fréquence centrale $f_c$ telle que

$$B_{RF} \geq \frac{f_c}{4}$$

et
à la réception, à démoduler en fréquence ledit signal de porteuse à l'aide dudit signal UWB pour en extraire ledit premier signal modulé, et à démoduler en fréquence ou en amplitude ledit signal de sous-porteuse (SP) à l'aide dudit premier signal modulé pour en extraire ladite information utile ($V_{in}$).

2. Procédé selon la revendication 1, **caractérisé en ce que** ladite sous-porteuse (SP) présente une forme sinusoïdale, en dent de scie ou triangulaire.

3. Procédé selon l'une quelconque des revendications 1 et 2, **caractérisé en ce que** ladite sous-porteuse (SP) présente une fréquence spécifique pour au moins un couple émetteur/récepteur.

4. Procédé selon l'une quelconque des revendications 1 à 3, **caractérisé en ce que** la fréquence de ladite sous-porteuse (SP) est supérieure à la bande passante spectrale de ladite information utile ($V_{in}$).

5. Procédé selon l'une quelconque des revendications 1 à 4, **caractérisé en ce que** ladite information utile ($V_{in}$) est engendrée à partir d'information se présentant sous forme analogique ou numérique, éventuellement encodée.

6. Procédé selon l'une quelconque des revendications 1 à 5, **caractérisé en ce qu'**à la réception, la démodulation de ladite porteuse est effectuée à l'aide d'une ligne à retard (15).

7. Procédé suivant la revendication 6, **caractérisé en ce que** le retard ($\tau$) de ladite ligne à retard (15) répond à l'expression suivante:

$$\tau = \frac{N}{4f_c} \qquad \text{avec N= 1, 3, 5.....}$$

fc étant la fréquence centrale du signal UWB.

8. Procédé suivant la revendication 7, **caractérisé en ce que** ladite ligne à retard (15) est réalisée sur un circuit sous la forme d'une ligne à ondes acoustiques de surface ou dans la masse.

9. Procédé suivant la revendication 7, **caractérisé en ce que** ladite ligne à retard (15) est réalisée à l'aide d'un câble coaxial.

**Patentansprüche**

1. Verfahren zum Mitteilen einer Nutzinformation, die als analoge oder digitale Spannung ($V_{in}$) vorliegt, zwischen mindestens einem Sender (1) und mindestens einem Empfänger (2) anhand von UWB-Signalen, wobei der Sender (1) einen Modulator, der dazu gedacht ist, einen Nebenträger anhand der Nutzinformation zu modulieren, um ein erstes moduliertes Signal bereitzustellen, einen Hochfrequenzoszillator (6) und eine Sendeantenne (7) umfasst, und wobei der Empfänger (2) eine Empfangsantenne (8) und Verstärkungs- und Demodulationsmittel (9, 10) zum Unterscheiden der Nutzinformation ($V_{in}$) in dem Signal, das an der Empfangsantenne (8) empfangen wird, umfasst, **dadurch gekennzeichnet,**

**dass** beim Senden die Modulation des Nebenträgers eine Frequenz- oder Amplitudenmodulation ist, und

**dass** es ferner darin besteht, ein Hochfrequenz-Trägersignal mit schmalem Frequenzband, das durch den Hochfrequenzoszillator generiert wird, anhand des ersten Signals, das mit einem Modulationsindex, der mindestens gleich 10 ist, moduliert wird, frequenzmäßig zu modulieren, um ein UWB-Signal bereitzustellen, wobei dieses eine Bandbreite $B_{RF}$ mit einer Mittenfrequenz $f_c$ aufweist, so dass

$$B_{RF} \geq \frac{f_c}{4}$$

und

beim Empfang das Trägersignal anhand des UWB-Signals frequenzmäßig zu demodulieren, um daraus das erste modulierte Signal zu entnehmen, und das Nebenträgersignal (SP) frequenzmäßig oder amplitudenmäßig anhand des ersten modulierten Signals zu demodulieren, um daraus die Nutzinformation ($V_{in}$) zu entnehmen.

2. Verfahren nach Anspruch 1, **dadurch gekennzeichnet, dass** der Nebenträger (SP) eine Sinuswellen-, Sägezahn- oder Dreiecksform aufweist.

3. Verfahren nach einem der Ansprüche 1 und 2, **dadurch gekennzeichnet, dass** der Nebenträger (SP) eine spezifische Frequenz für mindestens ein Sender/Empfänger-Paar aufweist.

4. Verfahren nach einem der Ansprüche 1 bis 3, **dadurch gekennzeichnet, dass** die Frequenz des Nebenträgers (SP) höher als die spektrale Übertragungsbandbreite der Nutzinformation ($V_{in}$) ist.

5. Verfahren nach einem der Ansprüche 1 bis 4, **dadurch gekennzeichnet, dass** die Nutzinformation ($V_{in}$) aus Informationen generiert wird, die in analoger oder digitaler, gegebenenfalls codierter Form vorliegen.

6. Verfahren nach einem der Ansprüche 1 bis 5, **dadurch gekennzeichnet, dass** beim Empfang die Demodulation des Trägers anhand einer Verzögerungsleitung (15) erfolgt.

7. Verfahren nach Anspruch 6, **dadurch gekennzeichnet, dass** die Verzögerung ($\tau$) der Verzögerungsleitung (15) dem folgenden Ausdruck entspricht:

$$\tau = \frac{N}{4f_c}, \text{ mit N = 1, 3, 5 ...,}$$

wobei $f_c$ die Mittenfrequenz des UWB-Signals ist.

8. Verfahren nach Anspruch 7, **dadurch gekennzeichnet, dass** die Verzögerungsleitung (15) in einer Schaltung in Form einer akustischen Oberflächenwellenleitung oder in der Masse ausgebildet ist.

9. Verfahren nach Anspruch 7, **dadurch gekennzeichnet, dass** die Verzögerungsleitung (15) anhand eines Koaxialkabels ausgebildet ist.

**Claims**

1. A method intended to communicate a payload assuming the form of an analog or digital voltage ($V_{in}$) between at least one transmitter (1) and at least one receiver (2) using UWB signals, said transmitter (1) comprising a modulator intended to modulate a subcarrier using said payload in order to provide a first modulated signal, a high-frequency oscillator (6) and a transmission antenna (7), and the receiver (2) comprising a receiving antenna (8) and amplification and demodulation means (9, 10) to discriminate said payload ($V_{in}$) in the signal received on said reception antenna (8), **characterized**

**in that**, during transmission, the modulation of said subcarrier is a frequency or amplitude modulation, and **in that** it further consists of frequency-modulating a high-frequency carrier signal with a narrow frequency band created by the high-frequency oscillator using the first modulated signal with a modulation index at least equal to 10 so as to provide a UWB signal, the latter having a bandwidth $B_{RF}$ at a central frequency $f_c$ such that

$$B_{RF} \geq \frac{f_c}{4}$$

and

during reception, frequency-demodulating said carrier signal using said UWB signal to extract said first modulated signal therefrom, and frequency- or amplitude-demodulating said subcarrier signal (SP) using said first modulated signal to extract said payload therefrom ($V_{in}$).

2.  The method according to claim 1, **characterized in that** said subcarrier (SP) has a sinusoidal, sawtooth or triangular shape.

3.  The method according to any one of claims 1 and 2, **characterized in that** said subcarrier (SP) has a specific frequency for at least one transmitter/receiver pair.

4.  The method according to any one of claims 1 to 3, **characterized in that** the frequency of said subcarrier (SP) is greater than the spectral bandwidth of said payload ($V_{in}$).

5.  The method according to any one of claims 1 to 4, **characterized in that** said payload ($V_{in}$) is created from information assuming an analog or digital form, potentially encoded.

6.  The method according to any one of claims 1 to 5, **characterized in that** upon reception, the demodulation of said carrier is done using a delay line (15).

7.  The method according to claim 6, **characterized in that** the delay ($\tau$) of said delay line (15) answers the following expression:

$$\tau = \frac{N}{4f_c} \qquad \text{with N= 1, 3, 5, ...}$$

fc being the central frequency of the UWB signal.

8.  The method according to claim 7, **characterized in that** said delay line (15) is made on a circuit in the form of a line of acoustic waves, on the surface or in the mass.

9.  The method according to claim 7, **characterized in that** said delay line (15) is made using a coaxial cable.

## FIG_1

## FIG_2

## FIG_3